# EUROPÄISCHE PATENTSCHRIFT

(11) **EP 0 527 259 B1**
(45) Veröffentlichungstag und Bekanntmachung des Hinweises auf die Patenterteilung: **25.10.1995**
(21) Anmeldenummer: 91113663.8
(22) Anmeldetag: 14.08.1991
(51) Int. Cl.: G01N 27/12

(54) **Gassensor mit halbleitendem Galliumoxid**
Gasdetektor with semiconductive galliumoxide
Détecteur de gaz avec de l'oxyde de gallium sémiconducteur

(43) Veröffentlichungstag der Anmeldung: 17.02.1993
(73) Patentinhaber: SIEMENS AKTIENGESELLSCHAFT, 80333 München (DE)
(72) Erfinder: Fleischer, Maximilian, Dipl.-Phys., W-8000 München 19 (DE); Meixner, Hans, Dr. rer. nat., W-8013 Haar (DE)

(56) Entgegenhaltungen:
- EP-A- 0 141 090
- FR-A- 2 331 016
- FR-A- 2 393 302
- GB-A- 1 562 623
- US-A- 4 574 264

## Beschreibung

Die vorliegende Erfindung betrifft einen Gassensor mit halbleitendem Galliumoxid, mit einem elektrisch nicht leitenden Trägerkörper, auf den Galliumoxid aufgebracht ist, mit einer Kontaktelektroden-Anordnung zum Messen der elektrischen Leitfähigkeit des Galliumoxids, einer Heizanordnung zum Heizen des Gassensors bei einer vorbestimmten Betriebstemperatur, einer Schutzhülle, die den Gassensor vor äußeren mechanischen Einflüssen schützt, und einem Befestigungssockel, wobei das Galliumoxid als eine gassensitive β-Ga₂O₃-Dünnschicht ausgebildet ist, wobei die Kontaktelektroden-Anordnung mit einer katalytischen deaktivierenden Schicht vollständig bedeckt ist und wobei die Kontaktelektroden vorzugsweise in interdigitaler Anordnung flächig verteilt angeordnet sind.

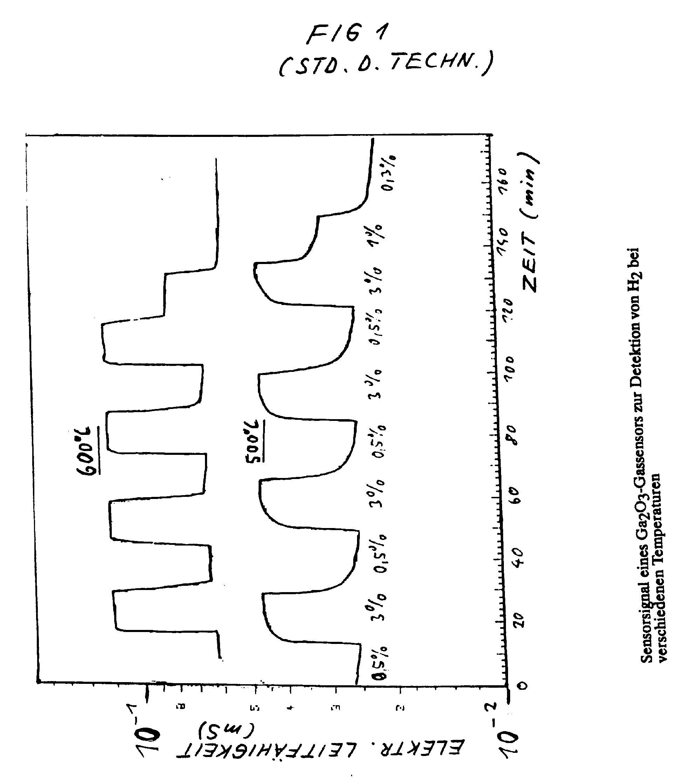

Bei Sensorschichten auf der Basis unbehandelten Ga₂O₃ (vgl. europäische Patentanmeldung 90 11 27 81.1) mußten bisher z. T. längere Ansprechzeiten hingenommen werden oder aber die Einsatztemperatur der Sensoren entsprechend hoch gewählt werden, vgl. Fig. 1, die die Reaktion auf H₂ bei 500 °C und 600 °C zeigt. Die Ansprechzeiten bei tieferen Temperaturen (500 °C) sind für verschiedene Applikationen (z. B. Detektion unverbrannter Kraftstoffanteile in Verbrennungsabgasen) zu groß. Für manche Anwendung ist es aus Gründen der benötigten Heizleistung und der geforderten Largzeitstabilität (z. B. als Rauchgasmelder) nicht wünschenswert, die Betriebstemperatur der Sensoren hoch zu wählen.

Der vorliegenden Erfindung liegt die Aufgabe zugrunde, einen Gassensor der eingangs genannten Art zu schaffen, der ein verbessertes Ansprechverhalten, nämlich eine verkürzte Ansprechzeit, aufweist und dabei einen einfachen, kostengünstigen Aufbau hat.

Zur Lösung der genannten Aufgabe ist ein Gassensor der eingangs genannten Art und gemäß dem Oberbegriff des Patentanspruchs 1 vorgesehen, der dadurch gekennzeichnet ist, daß die gassensitive ß-Ga₂O₃-Dünnschicht mit einem temperaturstabilen, fein dispergierten katalytisch aktiven Material versehen ist, das in seiner Wirkung bei betreffenden herrschenden Umgebungsbedingungen stabil ist.

Vorteilhafte Weiterbildungen der Erfindung sind durch die in den Unteransprüchen angegebenen Merkmale gekennzeichnet.

Im folgenden wird die Erfindung anhand mehrere Figuren im einzelnen beschrieben.
- Fig. 1: zeigt zwei Kennlinien eines Ga₂O₃-Gassensors zur Detektion von H₂ bei verschiedenen Betriebstemperaturen, nämlich die sich einstellenden elektrischen Leitfähigkeiten über der Zeit.
- Fig. 2: zeigt schematisch die interdigitalen Sensorstrukturen zweier Ga₂O₃-Gassensoren mit einem diese umgebenden resistiven Temperatursensor sowie die zugehörigen betreffenden Zu- und Abführungsleiterbahnen.

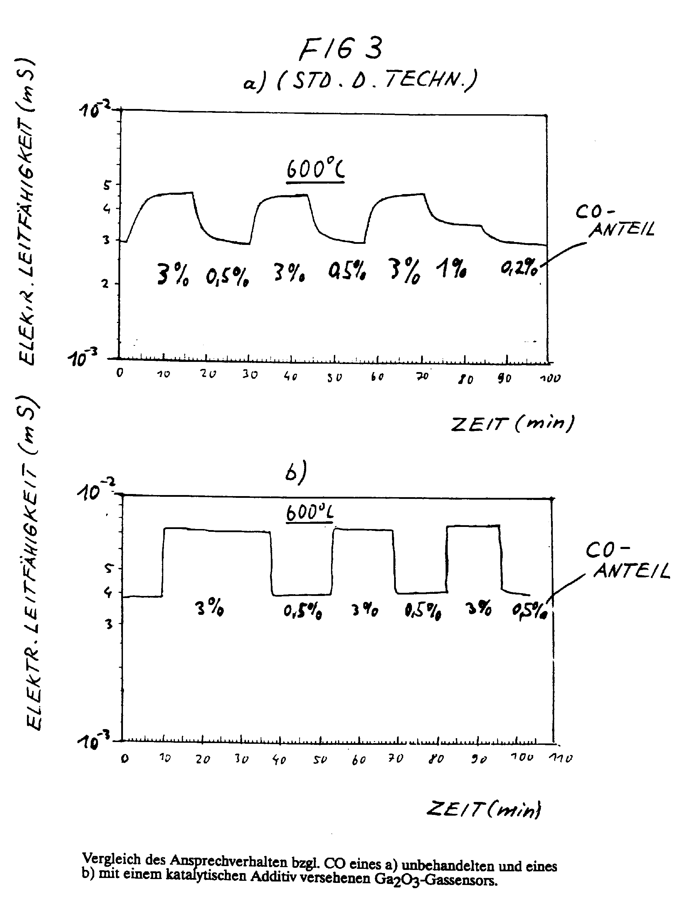

- Fig. 3: zeigt schematisch in zwei getrennten Diagrammen die Kennlinien der elektrischen Leitfähigkeit über der Zeit bei gleichen vorgegebenen Betriebstemperaturen zum einen (Fig. 3a) für einen Gassensor nach dem Stand der Technik und (Fig. 3b) für einen Gassensor gemäß der vorliegenden Erfindung.

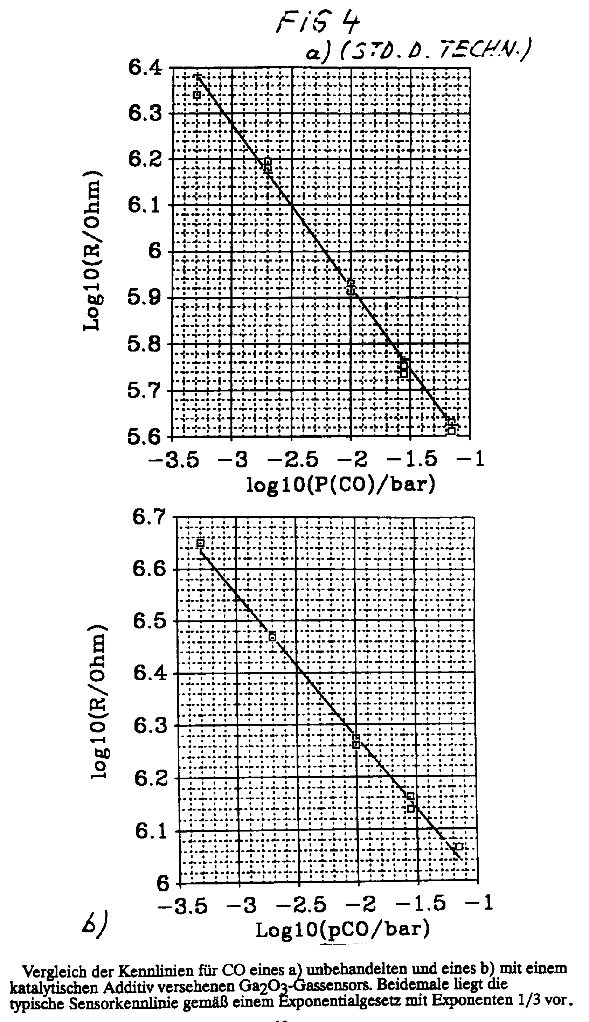

- Fig. 4: zeigt in jeweils doppeltlogarithmischer Darstellung Kennlinien von CO-Gassensoren (Fig. 4a) nach dem Stand der Technik und (Fig. 4b) gemäß der vorliegenden Erfindung.

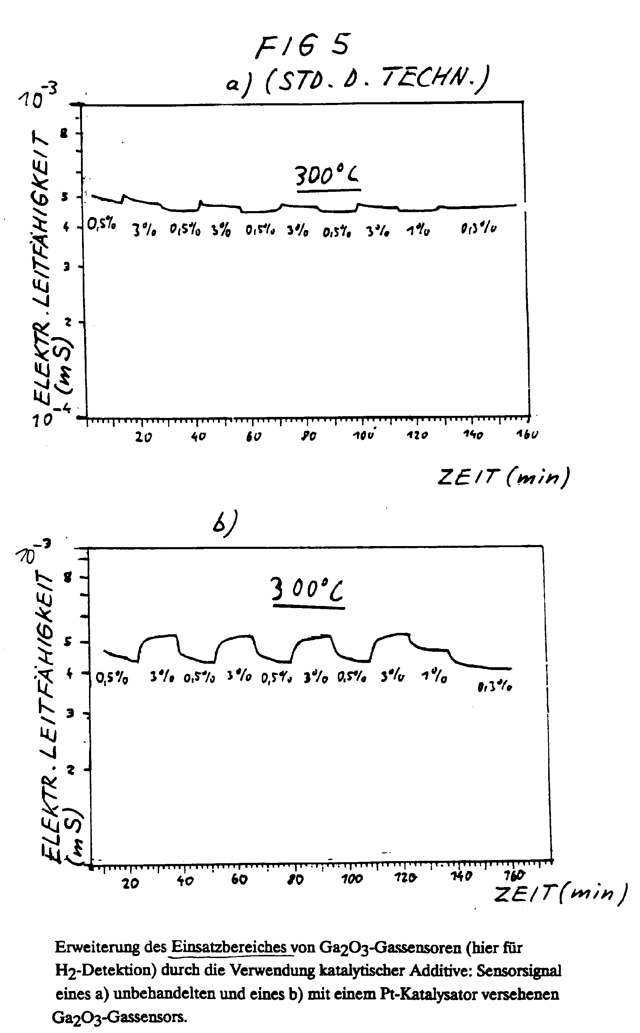

- Fig. 5: zeigt Kennlinien der elektriscnen Leitfänigkeiten über der Zeit bei gleichen Betriebstemperaturen eines Gassensors (Fig. 5a) nach dem Stand der Technik sowie eines Gassensors (Fig. 5b) gemäß der vorliegenden Erfindung.

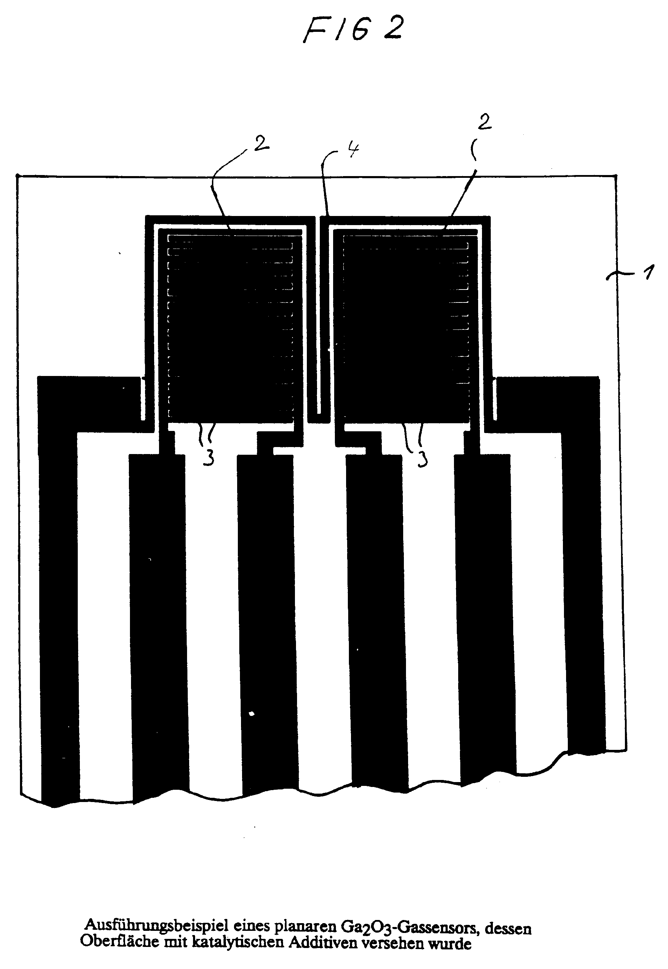

Der erfindungsgemäße Gassensor 2 geht von einem Gassensor mit halbleitendem Galliumoxid aus, der einen elektrisch nicht leitenden Trägerkörper 1, auf dem Galliumoxid aufgebracht ist, eine Kontaktelektroden-Anordnung 3 zum Messen der elektrischen Leitfähigkeit des Galliumoxids, eine Heizanordnung (nicht gezeigt) zum Heizen des Gassensors 2 bei einer vorbestimmten Betriebstemperatur, eine Schutzhülle die den Gassensor 2 vor äußeren mechanischen Einflüssen schützt, und einen Befestigungssockel aufweist, wobei das Galliumoxid als eine gassensitive β-Ga₂O₃-Dünnschicht ausgebildet ist, wobei die Kontaktelektroden-Anordnung 3 mit einer katalytisch deaktivierenden Schicht vollständig bedeckt ist und wobei die Kontaktelektroden 3 vorzugsweise in interdigitaler Anordnung flächig verteilt angeordnet sind, vgl. Fig. 2. Erfindungsgemäß ist zur Lösung der zuvor genannten Aufgabe die gassensitive β-Ga₂O₃-Dünnschicht mit einem temperaturstabilen, fein dispergierten katalytisch aktiven Material versehen, das in seiner Wirkung bei den betreffenden herrschenden Umgebungsbedingungen stabil ist.

Zur Erfassung der Betriebstemperatur ces Gassensors 2 ist vorzugsweise ein sog. resistiver Temperatursensor 4 vorgesehen, vgl. Fig. 2.

Das katalytisch aktive Material kann aus einem Edelmetall oder aus einer Legierung mit zumindest einem Edelmetall bestehen. Vorzugsweise ist das Edelmetall Pt, Pd, Rh, oder Ag. Das katalytisch aktive Material kann jedoch auch ein Nebengruppen-Metalloxid sein. Das Nebengruppen-Metalloxid kann vorzugsweise aus Nb₂O₃, Fe₂O₃, ZrO₂ oder TiO₂ bestehen.

Das katalytisch aktive Material kann auf die Oberfläche der gassensitiven ß-Ga₂O₃-Dünnschicht in Form einer zweiten Phase aufgebracht sein. Es kann jedoch auch in Form einer zweiten Phase innerhalb der gassensitiven ß-Ga₂O₃-Dünnschicht vorliegen.

Der Trägerkörper besteht entweder aus einem Keramikmaterial, Quarzglas oder aus Silizium mit einer elektrisch isolierenden Schicht.

Ein bevorzugtes Verfahren zur Herstellung eines Gassensors der eingangs genannten Art sieht Schritte zur Einstellung der Stöchiometrie der Ga₂O₃-Dünnschicht und zum Erzielen der erforderlichen Kristallstruktur und Stöchiometrie der Ga₂O₃-Dünnschicht einen Temperprozeß unter oxidierenden Bedingungen bei Temperaturen um vorzugsweise 1100 °C vor, wobei die Kontaktelektroden vorzugsweise in interdigitaler Anorndung flächig verteilt angeordnet werden und wobei die gassensitive ß-Ga₂O₃-Dünnschicht mit einem temperaturstabilen, fein dispergierten katalytisch aktiven Material versehen wird, das in seiner Wirkung bei den betreffenden herrschenden Umgebungsbedingungen stabil ist. Das katalytisch aktive Material wird vorzugsweise in Form einer zweiten Phase zugefügt. Es wird dabei vorzugsweise auf die Oberfläche der Dünnschicht aufgebracht. Es ist jedoch auch möglich, daß das katalytisch aktive Material in Form einer zweiten Phase innerhalb der Dünnschicht angeordnet wird.

Das Aufbringen des katalytisch aktiven Materials kann durch Aussputtern und anschließendes Tempern bei einer Temperatur durchgeführt werde, die größer als die betreffende Betriebstemperatur ist. Das Aufbringen des katalytisch aktiven Materials kann jedoch auch durch Abscheidung aus einer chemischen Lösung mit anschließenden Tempern bei einer Temperatur, die größer als die betreffende Betriebstemperatur ist, durchgeführt werden. Das Abscheiden kann durch Eintauchen in das chemisch gelöste katalytische Material durchgeführt werden. Es ist auch möglich, das Aufbringen des katalytisch aktiven Materials durch Aufsprühen einer chemischen Lösung desselben durchzuführen. Das Aufbringen des katalytisch aktiven Materials kann ebenfalls durch Ausfällen desselben aus einer chemischen Lösung durchgeführt werden. Schließlich ist es möglich, das Aufbringen des katalytisch aktiven Materials durch Aufdampfen desselben mit anschließendem Tempern bei einer Temperatur, die größer als die betreffende Betriebstemperatur ist, durchzuführen.

Das Einbringen des katalytisch aktiven Materials kann durch Sputtern, durch ein sogenanntes Co-Sputtern während des Aufbringens der Ga₂O₃-Dünnschicht, durch gleichzeitiges Aufdampfen während des Abscheidens der Ga₂O₃-Schicht, vorzugsweise durch Sputtern oder durch ein sogenanntes Sandwich-Sputtern durchgeführt werden.

Zum Betrieb eines Gassensors der vorgenannten Art ist vorgesehen, daß die Betriebstemperatur bei Benutzung des Gassensors als Sauerstoffsensor in einem Bereich von 750 bis 1100 °C, vorzugsweise bei 900 °C, liegt und daß bei Benutzung des Gassensors als Sensor für reduzierende Gase die Betriebstemperatur in einem Bereich von 200 bis 700 °C je nach Erfordernis für die betreffende Gasart, die Ansprechzeit und die Langzeitstabilität liegt.

Erfindungsgemäß ist außerdem vorgesehen, daß der für den Gassensor, vorzugsweise im Falle der Benutzung derselben als Sensor für reduzierende Gase, zur Behebung einer bei Betriebstemperatur nicht reversiblen Vergiftungserscheinung die Sensortemperatur kurzzeitig auf einen Wert erhöht wird, der wesentlich über demjenigen der jeweiligen Betriebstemperatur liegt, beispielsweise auf 750 °C.

## Patentansprüche

1. Gassensor mit halbleitendem Galliumoxid, mit einem elektrisch nichtleitenden Trägerkörper, auf den Galliumoxid aufgebracht ist, mit einer Kontaktelektroden-Anordnung zum Messen der elektrischen Leitfähigkeit des Galliumoxids, einer Heizanordnung zum Heizen des Gassensors bei einer vorbestimmten Betriebstemperatur, einer Schutzhülle, die den Gassensor vor äußeren mechanischen Einflüssen schützt, und einem Befestigungssockel, wobei das Galliumoxid als eine gassensitive β-Ga₂O₃-Dünnschicht ausgebildet ist, wobei die Kontaktelektroden-Anordnung mit einer katalytisch deaktivierenden Schicht vollständig bedeckt ist und wobei die Kontaktelektroden vorzugsweise in interdigitaler Anordnung flächig verteilt angeordnet sind,
**dadurch gekennzeichnet,**
daß die gassensitive β-Ga₂O₃-Dünnschicht mit einem fein dispergierten katalytisch aktiven Material versehen ist, das in seiner Wirkung bei den betreffenden herrschenden Umgebungsbedingungen stabil ist.

2. Gassensor nach Anspruch 1,
**dadurch gekennzeichnet,**
daß das katalytisch aktive Material ein Edelmetall ist.

3. Gassensor nach Anspruch 1,
**dadurch gekennzeichnet**,
daß das katalytisch aktive Material eine Legierung mit zumindest einem Edelmetall ist.

4. Gassensor nach Anspruch 2 oder 3,
**dadurch gekennzeichnet**,
daß das Edelmetall Pt ist.

5. Gassensor nach Anspruch 2 oder 3,
**dadurch gekennzeichnet**,
daß das Edelmetall Pd ist.

6. Gassensor nach Anspruch 2 oder 3,
**dadurch gekennzeichnet**,
daß das Edelmetall Rh ist.

7. Gassensor nach Anspruch 2 oder 3,
**dadurch gekennzeichnet**,
daß das Edelmetall Ag ist.

8. Gassensor nach Anspruch 1,
**dadurch gekennzeichnet,**
daß das katalytisch aktive Material ein Nebengruppen-Metalloxid ist.

9. Gassensor nach Anspruch 8,
**dadurch gekennzeichnet**,
daß das Nebengruppen-Metalloxid Nb₂O₃ ist.

10. Gassensor nach Anspruch 8,
**dadurch gekennzeichnet**,
daß das Nebengruppen-Metalloxid Fe₂O₃ ist.

11. Gassensor nach Anspruch 8,
**dadurch gekennzeichnet**,
daß das Nebengruppen-Metalloxid ZrO₂ ist.

12. Gassensor nach Anspruch 8,
**dadurch gekennzeichnet**,
daß das Nebengruppen-Metalloxid TiO₂ ist.

13. Gassensor nach einem der vorhergehenden Ansprüche,
**dadurch gekennzeichnet**,
daß das katalytisch aktive Material auf die Oberfläche der gassensitiven ß-Ga₂O₃-Dünnschicht in Form einer zweiten Phase aufgebracht ist.

14. Gassensor nach einem der Ansprüche 1 bis 12,
**dadurch gekennzeichnet,**
daß sich das katalytisch aktive Material in Form einer zweiten Phase innerhalb der gassensitiven ß-Ga₂O₃- Dünnschicht befindet.

15. Gassensor nach einem der vorhergehenden Ansprüche,
**dadurch gekennzeichnet**,
daß der Trägerkörper (1) aus einem aluminiumfreien Keramikmaterial besteht.

16. Gassensor nach einem der Ansprüche 1 bis 14,
**dadurch gekennzeichnet**,
daß der Trägerkörper (1) aus Quarzglas besteht.

17. Gassensor nach einem der Ansprüche 1 bis 14,
**dadurch gekennzeichnet**,
daß der Trägerkörper (1) aus Silizium mit einer elektrisch isolierenden Schicht besteht.

18. Verfahren zur Herstellung eines Gassensors mit halbleitendem Galliumoxid, mit einem elektrisch nicht leitenden Trägerkörper, auf dem Galliumoxid aufgebracht ist, mit einer Kontaktelektroden-Anordnung zum Messen der elektrischen Leitfähigkeit des Galliumoxids, einer Heizanordnung zum Messen der elektrischen Leitfähigkeit des Galliumoxids, einer Heizanordnung zum Heizen des Gassensors bei einer vorbestimmten Betriebstemperatur, einer Schutzhülle, die den Gassensor vor äußeren mechanischen Einflüssen schützt, und einem Befestigungssockel, wobei das Galliumoxid als eine gassensitive β-Ga₂O₃-Dünnschicht ausgebildet ist, wobei zur Einstellung der Stöchiometrie der Ga₂O₃-Dünnschicht und zum Erzielen der erforderlichen Kristallstruktur und Stöchiometrie der Ga₂O₃-Dünnschicht ein Temperprozess unter oxidierenden Bedingungen bei Temperaturen um vorzugsweise 1100 °C durchgeführt wird, wobei die Kontaktelektroden vorzugsweise in interdigitaler Anordnung flächig verteilt angeordnet sind und wobei die gassensitive β-Ga₂O₃-Dünnschicht mit einem fein dispergierten katalytisch aktiven Material versehen ist, das in seiner Wirkung bei den betreffenden herrschenden Umgebungsbedingungen stabil ist,
**dadurch gekennzeichnet**,
daß das katalytisch aktive Material in Form einer zweiten Phase zugefügt ist.

19. Gassensor nach Anspruch 18,
**dadurch gekennzeichnet**,
daß das katalytisch aktive Material auf die Oberfläche der Dünnschicht aufgebracht ist.

20. Gassensor nach Anspruch 18,
**dadurch gekennzeichnet**,
daß das katalytisch aktive Material in Form einer zweiten Phase innerhalb der Dünnschicht angeordnet ist.

21. Gassensor nach Anspruch 19,
**dadurch gekennzeichnet**,
daß das Aufbringen des katalytisch aktiven Materials durch Aufsputtern und anschließendes Tempern bei einer Temperatur durchgeführt wird, die größer als die betreffende Betriebstemperatur ist.

22. Gassensor nach Anspruch 19,
**dadurch gekennzeichnet**,
daß das Aufbringen des katalytisch aktiven Materials durch Abscheidung aus einer chemischen Lösung mit anschließendem Tempern bei einer Temperatur, die größer als die betreffende Betriebstemperatur ist, durchgeführt wird.

23. Gassensor nach Anspruch 22,
**dadurch gekennzeichnet**,
daß das Abscheiden durch Eintauchen in das chemisch gelöste katalytische Material durchgeführt wird.

24. Gassensor nach Anspruch 22,
**dadurch gekennzeichnet**,
daß das Aufbringen des katalytisch aktiven Materials durch Aufsprühen einer chemischen Lösung desselben durchgeführt wird.

25. Gassensor nach Anspruch 22,
**dadurch gekennzeichnet**,
daß das Aufbringen des katalytisch aktiven Materials durch Ausfällen desselben aus einer chemischen Lösung durchgeführt wird.

26. Gassensor nach Anspruch 19,
**dadurch gekennzeichnet**,
daß das Aufbringen des katalytisch aktiven Materials durch Aufdampfen desselben mit anschließendem Tempern bei einer Temperatur, die größer als die betreffende Betriebstemperatur ist, durchgeführt wird.

27. Gassensor nach Anspruch 20,
**dadurch gekennzeichnet**,
daß das Einbringen des katalytisch aktiven Materials durch Sputtern durchgeführt wird.

28. Gassensor nach Anspruch 27,
**dadurch gekennzeichnet**,
daß das Einbringen des katalytisch aktiven Materials durch ein sog. Co-Sputtern während des Aufbringens der Ga₂O₃-Dünnschicht durchgeführt wird.

29. Gassensor nach Anspruch 20,
**dadurch gekennzeichnet**,
daß das Einbringen des katalytisch aktiven Materials durch gleichzeitiges Aufdampfen während des Abscheidens der Ga₂O₃-Schicht, vorzugsweise durch Sputtern, durchgeführt wird.

30. Gassensor nach Anspruch 20,
**dadurch gekennzeichnet**,
daß das Einbringen des katalytisch aktiven Materials durch sog. Sandwich-Sputtern durchgeführt wird.

31. Verfahren zum Betrieb eines Gassensors mit halbleitendem Galliumoxid, mit einem elektrisch nicht leitenden Trägerkörper, auf den Galliumoxid aufgebracht ist, mit einer Kontaktelektroden-Anordnung zum Messen der elektrischen Leitfähigkeit des Galliumoxids, einer Heizanordnung zum Heizen des Gassensors bei einer vorbestimmten Betriebstemperatur, einer Schutzhülle, die den Gassensor vor äußeren mechanischen Einflüssen schützt, und einem Befestigungssockel, wobei das Galliumoxid als eine gassensitive ß-Ga₂O₃-Dünnschicht ausgebildet ist, wobei die Kontaktelektroden-Anordnung mit eine katalytisch deaktivierenden Schicht ständig bedeckt ist, wobei die Kontaktelektroden vorzugsweise in interdigitaler Anordnung flächig verteilt angeordnet sind und wobei die gassensitive ß-Ga₂O₃-Dünnschicht mit einem temperaturstabilen, fein dispergierten katalytisch aktiven Material versehen ist, das in seiner Wirkung bei den betreffenden herrschenden Umgebungsbedingungen stabil ist,
**dadurch gekennzeichnet**,
daß die Betriebstemperatur bei Benutzung des Gassensors als Sauerstoffsensor in einem Bereich von 750-1100 °C, vorzugsweise bei 900 °C, liegt, und daß bei Benutzung des Gassensors als Sensor für reduzierende Gase die Betriebstemperatur in einem Bereich von 200-700 °C je nach Erfordernis für die betreffende Gasart, die Ansprechzeit und die Langzeitstabilität liegt.

32. Verfahren nach Anspruch 31,
**dadurch gekennzeichnet**,
daß der für den Gassensor, vorzugsweise im Falle der Benutzung desselben als Sensor für reduzierende Gase, zur Behebung einer bei Betriebstemperatur nicht reversiblen Vergiftungserscheinung die Sensortemperatur kurzzeitig auf einen Wert erhöht wird, der wesentlich über demjenigen der jeweiligen Betriebstemperatur liegt, beispielsweise auf 750 °C.

## Claims

1. Gas sensor containing semiconducting gallium oxide, comprising an electrically non-conductive base body to which gallium oxide has been applied, a contact electrode arrangement for measuring the electrical conductivity of the gallium oxide, a heating arrangement for heating the gas sensor at a predetermined operating temperature, a protective sheath which protects the gas sensor from external mechanical effects, and a mounting base, the gallium oxide being in the form of a gas-sensitive β-Ga₂O₃ thin film, the contact electrode arrangement being completely covered with a catalytically deactivating layer, and the contact electrodes preferably being disposed in a planar distribution in an interdigital arrangement,
characterized in that
the gas-sensitive β-Ga₂O₃ thin film is provided with a finely disperse catalytically active material which, in terms of its activity, is stable at the respective prevailing ambient conditions.

2. Gas sensor according to Claim 1,
characterized in that
the catalytically active material is a noble metal.

3. Gas sensor according to Claim 1,
characterized in that
the catalytically active material is an alloy containing at least one noble metal.

4. Gas sensor according to Claim 2 or 3,
characterized in that
the noble metal is Pt.

5. Gas sensor according to Claim 2 or 3,
characterized in that
the noble metal is Pd.

6. Gas sensor according to Claim 2 or 3,
characterized in that
the noble metal is Rh.

7. Gas sensor according to Claim 2 or 3,
characterized in that
the noble metal is Ag.

8. Gas sensor according to Claim 1,
characterized in that
the catalytically active material is a subgroup metal oxide.

9. Gas sensor according to Claim 8,
characterized in that
the subgroup metal oxide is Nb₂O₃.

10. Gas sensor according to Claim 8,
characterized in that
the subgroup metal oxide is Fe₂O₃.

11. Gas sensor according to Claim 8,
characterized in that
the subgroup metal oxide is ZrO₂.

12. Gas sensor according to Claim 8,
characterized in that
the subgroup metal oxide is TiO₂.

13. Gas sensor according to any one of the preceding claims,
characterized in that
the catalytically active material has been applied to the surface of the gas-sensitive β-Ga₂O₃ thin film in the form of a second phase.

14. Gas sensor according to any one of Claims 1 to 12,
characterized in that
the catalytically active material is present within the gas-sensitive β-Ga₂O₃ thin film in the form of a second phase.

15. Gas sensor according to any one of the preceding claims,
characterized in that
the base body comprises an aluminium-free ceramic material.

16. Gas sensor according to any one of Claims 1 to 14,
characterized in that
the base body comprises quartz glass.

17. Gas sensor according to any one of Claims 1 to 14,
characterized in that
the base body comprises silicon with an electrically insulating layer.

18. Method for fabricating a gas sensor containing semiconducting gallium oxide and comprising an electrically non-conductive base body to which gallium oxide has been applied, a contact electrode arrangement for measuring the electrical conductivity of the gallium oxide, a heating arrangement for measuring the electrical conductivity of the gallium oxide, a heating arrangement for heating the gas sensor at a predetermined operating temperature, a protective sheath which protects the gas sensor from external mechanical effects, and a mounting base, the gallium oxide being in the form of a gas-sensitive β-Ga₂O₃ thin film, a tempering process, for the purpose of establishing the stoichiometry of the Ga₂O₃ thin film and of achieving the crystal structure and stoichiometry required of the Ga₂O₃ thin film, being carried out under oxidizing conditions at temperatures around preferably 1100°C, and the contact electrodes preferably being disposed in a planar distribution in an interdigital arrangement, and the gas-sensitive β-Ga₂O₃ thin film being provided with a finely disperse catalytically active material which, in terms of its activity, is stable at the respective prevailing ambient conditions,
characterized in that
the catalytically active material has been added in the form of a second phase.

19. Gas sensor according to Claim 18,
characterized in that
the catalytically active material has been applied to the surface of the thin film.

20. Gas sensor according to Claim 18,
characterized in that
the catalytically active material is disposed within the thin film in the form of a second phase.

21. Gas sensor according to Claim 19,
characterized in that
the application of the catalytically active material is effected by sputter deposition and subsequent tempering at a temperature which is higher than the operating temperature in question.

22. Gas sensor according to Claim 19,
characterized in that
the application of the catalytically active material is effected by deposition from a chemical solution with subsequent tempering at a temperature which is higher than the operating temperature in question.

23. Gas sensor according to Claim 22,
characterized in that
the deposition is effected by dipping into the chemically dissolved catalytic material.

24. Gas sensor according to Claim 22,
characterized in that
the application of the catalytically active material is effected by a chemical solution thereof being sprayed on.

25. Gas sensor according to Claim 22,
characterized in that
the application of the catalytically active material is effected by precipitating it from a chemical solution.

26. Gas sensor according to Claim 19,
characterized in that
the application of the catalytically active material is effected by vapour deposition thereof and subsequent tempering at a temperature which is higher than the operating temperature in question.

27. Gas sensor according to Claim 20,
characterized in that
the introduction of the catalytically active material is effected by sputtering.

28. Gas sensor according to Claim 27,
characterized in that
the introduction of the catalytically active material is effected by so-called co-sputtering during the application of the Ga₂O₃ thin film.

29. Gas sensor according to Claim 20,
characterized in that
the introduction of the catalytically active material is effected by simultaneous vapour deposition during the deposition of the Ga₂O₃ layer, preferably by sputtering.

30. Gas sensor according to Claim 20,
characterized in that
the introduction of the catalytically active material is effected by so-callled sandwich-sputtering.

31. Method for operating a gas sensor containing semiconducting gallium oxide, comprising an electrically non-conductive base body to which gallium oxide has been applied, a contact electrode arrangement for measuring the electrical conductivity of the gallium oxide, a heating arrangement for heating the gas sensor at a predetermined operating temperature, a protective sheath which protects the gas sensor from external mechanical effects, and a mounting base, the gallium oxide being in the form of a gas-sensitive β-Ga₂O₃ thin film, the contact electrode arrangement being continuously covered with a catalytically deactivating layer, the contact electrodes preferably being disposed in a planar distribution in an interdigital arrangement, and the gas-sensitive β-Ga₂O₃ thin film being provided with a temperature-sensitive finely disperse catalytically active material which, in terms of its activity, is stable at the respective prevailing ambient conditions
characterized in that
the operating temperature in the case of the gas sensor being used as an oxygen sensor being in a range of 750-1100°C, preferably at 900°C, and in that, in the case of the gas sensor being used as a sensor for reducing gases, the operating temperature is in a range of 200-700°C, depending on the requirements for the type of gas in question, the response time and the long-term stability.

32. Method according to Claim 31,
characterized in that
with respect to the gas sensor, preferably in the case where it is used as a sensor for reducing gases, for the purpose of remedying a poisoning phenomenon which is not reversible at the operating temperature, the sensor temperature is briefly raised to a value which is considerably above that of the respective operating temperature, for example to 750°C.

## Revendications

1. Détecteur de gaz comportant de l'oxyde de gallium semiconducteur, et possédant un corps de support non conducteur du point de vue électrique, sur lequel est déposé de l'oxyde de gallium, et comportant un dispositif d'électrodes de contact servant à mesurer la conductivité électrique de l'oxyde de gallium, un dispositif de chauffage servant à chauffer le détecteur de gaz à une température de service prédéterminée, une douille de protection qui protège le détecteur de gaz vis-à-vis d'influences mécaniques extérieures, et un socle de fixation, l'oxyde de gallium étant formé en tant que couche mince de β-Ga₂O₃ sensible au gaz, le dispositif d'électrodes de contact étant entièrement recouvert par une couche réalisant une désactivation catalytique, et dans lequel les électrodes de contact sont disposées de préférence en étant réparties sur une certaine surface en étant dans la même disposition interdigitée, caractérisé par le fait que la couche mince de β-Ga₂O₃ sensible au gaz est recouverte d'un matériau finement dispersé, actif du point de vue catalytique et dont l'action est stable dans les conditions d'environnement existantes considérées.

2. Détecteur de gaz suivant la revendication 1, caractérisé par le fait que le noyau actif du point de vue catalytique est un métal précieux.

3. Détecteur de gaz suivant la revendication 1, caractérisé par le fait que le matériau actif du point de vue catalytique est un alliage avec au moins un métal précieux.

4. Détecteur de gaz suivant la revendication 2 ou 3, caractérisé par le fait que le métal précieux est du Pt.

5. Détecteur de gaz suivant la revendication 2 ou 3, caractérisé par le fait que le métal précieux est du Pd.

6. Détecteur de gaz suivant la revendication 2 ou 3, caractérisé par le fait que le métal précieux est du Rh.

7. Détecteur de gaz suivant la revendication 2 ou 3, caractérisé par le fait que le métal précieux est du Ag.

8. Détecteur de gaz suivant la revendication 1, caractérisé par le fait que le matériau actif du point de vue catalytique est un oxyde métallique d'un groupe secondaire.

9. Détecteur de gaz suivant la revendication 8, caractérisé par le fait que l'oxyde métallique du groupe secondaire est du Nb₂O₃.

10. Détecteur de gaz suivant la revendication 8, caractérisé par le fait que l'oxyde métallique du groupe secondaire est du Fe₂O₃.

11. Détecteur de gaz suivant la revendication 8, caractérisé par le fait que l'oxyde métallique du groupe secondaire est du ZrO₂.

12. Détecteur de gaz suivant la revendication 8, caractérisé par le fait que l'oxyde métallique du groupe secondaire est du TiO₂.

13. Détecteur de gaz suivant l'une des revendications précédentes, caractérisé par le fait que le matériau actif du point de vue catalytique est déposé sur la surface de la couche de β-Ga₂O₃ sensible au gaz, sous la forme d'une seconde phase.

14. Détecteur de gaz suivant l'une des revendications 1 à 12, caractérisé par le fait que le matériau actif du point de vue catalytique est présent sous la forme d'une seconde phase à l'intérieur de la couche mince de β-Ga₂O₃ sensible au gaz.

15. Détecteur de gaz suivant l'une des revendications précédentes, caractérisé par le fait que le corps de support (1) est réalisé en un matériau céramique ne contenant pas d'aluminium.

16. Détecteur de gaz suivant l'une des revendications 1 à 14, caractérisé par le fait que le corps de support (1) est formé de verre quartzeux.

17. Détecteur de gaz suivant l'une des revendications 1 à 14, caractérisé par le fait que le corps de support (1) est réalisé en silicium possédant une couche électriquement isolante.

18. Procédé pour fabriquer un détecteur de gaz comportant de l'oxyde de gallium semiconducteur et possédant un corps de support non conducteur du point de vue électrique, sur lequel est déposé de l'oxyde de gallium, et comportant un dispositif d'électrodes de contact servant à mesurer la conductivité électrique de l'oxyde de gallium, un dispositif de chauffage servant à chauffer le détecteur de gaz à une température de service prédéterminée, une douille de protection qui protège le détecteur de gaz vis-à-vis d'influences mécaniques extérieures, et un socle de fixation, l'oxyde de gallium étant formé en tant que couche mince de β-Ga₂O₃ sensible au gaz, selon lequel pour régler la stoechiométrie de la couche mince de Ga₂O₃ et pour obtenir la structure cristalline requise et la stoechiométrie requise de la couche mince de Ga₂O₃, on exécute un traitement de recuit dans des conditions oxydantes à des températures avoisinant de préférence 1100°C, on dispose les électrodes de contact de préférence en les répartissant sur une certaine surface selon une disposition interdigitée et on prévoit dans la couche mince de β-Ga₂O₃ sensible au gaz un matériau finement dispersé, actif du point de vue catalytique, dont l'action est stable dans les conditions d'environnement existantes considérées, caractérisé par le fait que le matériau actif du point de vue catalytique est ajouté sous la forme d'une seconde phase.

19. Détecteur de gaz suivant la revendication 18, caractérisé par le fait que le matériau actif du point de vue catalytique est disposé sur la surface de la couche mince.

20. Détecteur de gaz suivant la revendication 18, caractérisé par le fait que le matériau actif du point de vue catalytique est déposé sous la forme d'une seconde phase à l'intérieur de la couche mince.

21. Détecteur de gaz suivant la revendication 19, caractérisé par le fait que le dépôt du matériau actif du point de vue catalytique est exécuté par dépôt par pulvérisation cathodique et recuit ultérieur à une température qui est supérieure à la température de service considérée.

22. Détecteur de gaz suivant la revendication 19, caractérisé par le fait que le dépôt du matériau actif du point de vue catalytique est exécuté par dépôt à partir d'une solution chimique avec recuit ultérieur à une température qui est supérieure à la température de service considérée.

23. Détecteur de gaz suivant la revendication 22, caractérisé par le fait que le dépôt est exécuté par immersion dans le matériau catalytique dissous chimiquement.

24. Détecteur de gaz suivant la revendication 22, caractérisé par le fait que le dépôt du matériau actif du point de vue catalytique est exécuté par pulvérisation d'une solution chimique de ce matériau.

25. Détecteur de gaz suivant la revendication 22, caractérisé par le fait que le dépôt du matériau actif du point de vue catalytique est exécuté au moyen de la précipitation de ce dernier à partir d'une solution chimique.

26. Détecteur de gaz suivant la revendication 19, caractérisé par le fait que le dépôt du matériau actif du point de vue catalytique est exécuté par dépôt par évaporation de ce matériau avec recuit ultérieur à une température qui est supérieure à la température de service considérée.

27. Détecteur de gaz suivant la revendication 20, caractérisé par le fait que le dépôt du matériau actif du point de vue catalytique est exécuté par pulvérisation cathodique.

28. Détecteur de gaz suivant la revendication 27, caractérisé par le fait que l'insertion du matériau actif du point de vue catalytique est exécutée au moyen de ce qu'on appelle une copolarisation pendant le dépôt de la couche mince de Ga₂O₃.

29. Détecteur de gaz suivant la revendication 20, caractérisé par le fait que l'introduction du matériau actif du point de vue catalytique est exécutée au moyen d'un dépôt simultané par évaporation pendant le dépôt de la couche de Ga₂O₃, de préférence par pulvérisation.

30. Détecteur de gaz suivant la revendication 20, caractérisé par le fait que l'introduction du matériau actif du point de vue catalytique est exécutée au moyen de ce qu'on appelle une pulvérisation sandwich.

31. Procédé pour faire fonctionner un détecteur de gaz comportant de l'oxyde de gallium semiconducteur, et possédant un corps de support non conducteur du point de vue électrique, sur lequel est déposé de l'oxyde de gallium, et comportant un dispositif d'électrodes de contact servant à mesurer la conductivité électrique de l'oxyde de gallium, un dispositif de chauffage servant à chauffer le détecteur de gaz à une température de service prédéterminée, une douille de protection qui protège le détecteur de gaz vis-à-vis d'influences mécaniques extérieures, et un socle de fixation, l'oxyde de gallium étant formé en tant que couche mince de β-Ga₂O₃ sensible au gaz, le dispositif d'électrodes de contact étant entièrement recouvert par une couche réalisant une désactivation catalytique, et dans lequel les électrodes de contact sont disposées de préférence en étant réparties sur une certaine surface en étant dans la même disposition interdigitée, et dans lequel la couche mince en β-Ga₂O₃ sensible au gaz est pourvue d'un matériau actif du point de vue catalytique, résistant à la température et finement dispersé, dont l'action est stable dans les conditions d'environnement existantes considérées, caractérisé par le fait que la température de service dans le cas de l'utilisation du détecteur de gaz en tant que détecteur d'oxygène se situe dans une gamme de 750-1100°C et est égale de préférence à 900°C, et que dans le cas de l'utilisation du détecteur de gaz en tant que détecteur de gaz réducteurs, la température de service se situe dans une gamme de 200-700°C en fonction des exigences concernant le type de gaz considéré, le temps de réponse et la stabilité de longue durée.

32. Procédé suivant la revendication 31, caractérisé par le fait que pour le détecteur de gaz, de préférence dans le cas de l'utilisation de ce dernier, en tant que détecteur pour des gaz réducteurs, pour supprimer un phénomène d'empoisonnement irréversible à la température de service, on accroît pendant un bref intervalle de temps la température du détecteur à une valeur qui est nettement supérieure à la température de service, par exemple 750°C.
